# EUROPEAN PATENT APPLICATION

(11) **EP 1 541 916 A1**
(43) Date of publication of application: **15.06.2005**
(21) Application number: 03764173.5
(22) Date of filing: 11.07.2003
(51) Int. Cl.: F16L 59/04, D04H 1/42, D04H 1/74, E04B 1/80

(54) **MAT-SHAPED HEAT INSULATING MATERIAL COMPOSED OF INORGANIC FIBER, PACKAGE THEREOF AND HEAT INSULATING STRUCTURE INCLUDING THE SAME**

(30) Priority: 11.07.2002 JP 2002202325
(71) Applicant: Paramount Glass Manufacturing Co., Ltd., Koriyama-shim, Fukushima 963-8017 (JP)
(72) Inventor: OTAKI, Keiji, c/o Koriyama Factory Paramount, Koriyama-shi, Fukushima 963-8017 (JP); MITA, Yuji, c/o Koriyama Factory Paramount, Koriyama-shi, Fukushima 963-8017 (JP); WATANABE, Tomohiro, c/o Koriyama Factory Paramount, Koriyama-shi, Fukushima 963-8017 (JP); WATANABE, Junichi, c/o Koriyama Factory Paramount, Koriyama-shi, Fukushima 963-8017 (JP)
(74) Representative: Crouch, David John
(86) International application number: PCT/JP2003/008833
(87) International publication number: WO 2004/008017

(57) **Abstract**

A mat-shaped thermal insulator (4) made of inorganic fiber, wherein at least a part of inorganic fibers is built-up in a direction parallel to lateral surfaces of the insulator (4), and said insulator (4) is formed by cutting a fibrous built-up article (1) formed by building-up inorganic fibers, to form cut built-up articles (3, 31, 32, 33, 34), rotating at least one of the cut articles (3, 31, 32, 33, 34) by an angle of 90 degrees in a direction perpendicular to a longitudinal direction, to form a rotated built-up article (331, 332, 333, 334) in which the inorganic fibers are built-up in a direction parallel to lateral sides of the cut article, and integrating the cut articles (3, 31, 32, 33, 34) and/or the rotated article (331, 332, 333, 334) transversally in a direction perpendicular to cutting direction. Preferably, the lateral surfaces of the insulator (4) are inclined. Still preferably, longitudinal cuts (13) are formed on the lateral surfaces of the insulator (4) so as to make the insulator partially compressible.

## Description

### FIELD OF THE INVENTION

This invention relates to an inorganic fiber thermal insulator to be used in walls, under floors, on ceilings and under roofs of wood and skeleton construction houses for the purpose of thermal insulation and sound absorption, and also to a thermal insulation structure using such a thermal insulator.

### RELATED ARTS

Inorganic fiber mats used for thermal insulation and sound absorption of houses are typically produced by applying thermosetting resin such as phenol resin to inorganic fiber such as glass wool or rock wool, subsequently building-up such inorganic fibers, heating them to form a built-up article, and cutting the built-up articles into a plate-shaped mat.

Inorganic fiber mats coated with polyethylene film on the surface thereof have been and are being popularly used as thermal insulators. Such thermal insulators are arranged between pillars of houses for the purpose of thermal insulation and sound absorption.

Inorganic fiber mats of the type under consideration are used for wooden framework constructions, wooden panel constructions, prefabricated wall constructions, iron framework constructions, skeleton panel constructions and so on. When inorganic fiber mats are used in walls, they are arranged between pillars. When they are used under floors, they are arranged between sleepers and floor joists. When they are used on ceilings, they are arranged between beams. When they are used under roofs, they are arranged between rafters.

Conventionally, when a mat is to be arranged between pillars or some other structures, and when the space where it is to be arranged is narrower than the width of the mat, the mat is simply cut to make its width match the distance separating the structures.

In the case of wooden houses, the selvages of mats running along the lateral edges thereof are rigidly anchored to the corresponding pillars by means of tacks or some other fasteners to hold them in place. Then, the mats also operate to dampproof the house.

Japanese Patent Publication No. Hei 7-116670 "Inorganic Fiber Mat" (Japanese Patent No. 2130081) discloses "an inorganic fiber mat formed to show a plate-shaped profile and having built-up inorganic fiber arranged along the surfaces thereof, characterized in that longitudinal slits are formed perpendicular to the surfaces and alternately from the opposite surfaces at regular intervals with a small margin, and that the mat can be bent by 180 degrees along a slit to expose the inside". According to the invention, the inorganic fiber mat is provided with slits in a direction of a thickness of the mat in order to make it easily adaptable to different distances of two structures. Thus, the mat is flexible, because it can be easily folded when it is placed in position. However, the mat according to this patent document can be compressed only to reduce the thickness, and packaged. The patent document does not consider anything about transversal compression.

Such inorganic fiber mats are packaged for the purpose of raising the efficiency of storage and transportation. More specifically, the package of inorganic fiber mats is prepared by building-up a number of mat-shaped thermal insulators, compressing them in a thickness direction thereof, and putting the compressed mats into a bag. If the thermal insulators are short (e.g., 1,370mm long), they are not bent when packaged. If the thermal insulators are long (e.g., 2,740mm long), they may be bent longitudinally at the middle when packaged. Japanese Utility Model Registration No. 3038186 discloses "a package of a group of inorganic fiber mats".

Known inorganic fiber mats are accompanied by the following problems.
(1) Since inorganic fibers in the prior mat are built-up in the thickness direction, such mat expands and contracts largely to change the thickness. Thus, such mat may not provide a desired thickness, because the thickness changes with time due to degradation, as the mat is pressed transversally by pillars or other structures.
(2) Since inorganic fibers in the prior mat are built-up in the thickness direction, such mat poorly expands and contracts transversally. Therefore, when such mat is arranged between structures, gaps can be produced between the mat and the structures. When the structures has one or more than one projections smaller than the thickness of the mat, the mat would not be tightly held in contact with the structures, to produce gaps that are poorly thermally insulating. Appearance of such gaps constitutes a problem that has to be solved.
(3) Again, since inorganic fibers in the prior mat are built-up in the thickness direction, such mat is transversally less flexible. Thus, the mat has to be often cut transversally. When a mat is cut, the exposed inside has to be covered by a facing material. Therefore, the facing material of the mat is required to have a selvage or crossette.
   Thus, it is necessary to cut the mat by hand on site. If the mat is not cut perpendicular to the top and bottom surfaces thereof, gaps are produced, so as to derive poorly thermal insulating.
   Additionally, debris of cut inorganic fiber mats have to be disposed as industrial wastes.
(4) Known mats are transversally less flexible. Therefore, the selvages of mats (lateral edges) have to be rigidly anchored to the corresponding structures by means of tacks or some other fasteners to hold them in place. If they are not rigidly anchored to the corresponding structures, the mats can slide down to produce gaps above the tops thereof that are poorly thermally insulating.
   Additionally, when fasteners are used to anchor mats, they have to be removed when the building containing such mats is dismantled. The structures cannot be recycled unless the fasteners are removed.
(5) According to the invention disclosed in Japanese Patent Publication No. Hei 7-1166670, a multilayered article of inorganic fibers is formed with longitudinal slits perpendicular to the top and bottom surfaces and alternately from the opposite surfaces. Said slit does not extend entirely in the thickness direction. Then, the article is compressed to reduce the thickness, and is packaged. The packaged mat is then unpacked on site, and folded by bending it along the slits by 180 degrees, so that the inorganic fibers are built-up longitudinally. The slits need to be provided with margins so that the mat may not be cut apart. If the slits are shallow, the operation of folding the article is obstructed to make it difficult to produce a mat. If, on the other hand, the slits are too deep, the articles can be cut apart. Additionally, since the slits are formed with margins, the top and bottom surfaces of the mat produce steps or undulations, which by turn produce gaps that are poorly thermally insulating when the mat is placed in position. Since the surfaces that are brought into contact with the corresponding structures are not bonded, the mat can hardly maintain its intended profile without some holding means. In other words, the mat is dimensionally unstable.
   The compressed and packaged article is unpacked on site, made to restore its thickness, and then folded by 180 degrees to produce a mat. The produced mat can show a short width if the thickness of the article is not restored sufficiently. On the other hand, the produced mat can show a too large width due to the restoration too much. In this case, it is necessary to compress the mat in the width direction. The mat may be forced out from the wall where it is arranged after being placed in position.
   Therefore, it has been required to provide an inorganic fiber mat including inorganic fibers built-up in the thickness direction of the mat, without giving rise to the above identified problems.
(6) Packages of known mat-shaped insulators are also accompanied problems as pointed out below. Inorganic fiber are built-up in parallel with the top and bottom surfaces (and in the transversal direction) of known mat-shaped insulators. Therefore, packages of known insulators can be compressed in a direction of a thickness. However, when the insulator is compressed transversally, the fibers can be destroyed. Thus, when the package is unpacked on site to release the insulator from the compressed state, the width of the insulator may not be restored. No prior art discloses a packages prepared by transversally compressing insulators. Hence, there is a demand for packages of insulators capable of being compressed transversally, in view of the efficiency of transportation.

### SUMMARY OF THE INVENTION

According to the invention, the above identified problems are dissolved by providing a mat-shaped thermal insulator made of inorganic fiber, wherein
at least a part of inorganic fibers is built-up in a direction parallel to lateral surfaces of the insulator, and
said insulator is formed by
cutting a fibrous built-up article formed by building-up inorganic fibers, to form cut built-up articles,
rotating at least one of the cut articles by an angle of 90 degrees in a direction perpendicular to a longitudinal direction, to form a rotated built-up article in which the inorganic fibers are built-up in a direction parallel to lateral sides of the cut article, and
integrating the cut articles and/or the rotated article transversally in a direction perpendicular to cutting direction.

Preferably, the lateral surfaces of the insulator are inclined.

Preferably, longitudinal cuts are formed on the lateral surfaces of the insulator so as to make the insulator partially compressible.

At least one of the surfaces of the insulator may be coated by a facing material.

Preferably, said insulator and the facing material are bonded to each other by means of an adhesive agent. The adhesive agent may be partially applied to the insulator and/or the facing material, and may be entirely applied to surfaces of the insulator and/or the facing material.

According to the invention, there is also provided a package of mat-shaped inorganic fiber thermal insulators, wherein
said package comprises a packaging bag and aligned thermal insulating articles packaged in the packaging bag,
said aligned articles are compressed transversally,
said aligned articles are formed by arranging a plurality of mat-shaped inorganic fiber thermal insulators described above, in parallel and/or by laying the insulators one on the other, and
in each of said mat-shaped inorganic fiber thermal insulators, inorganic fibers are built-up in a direction of a width of the aligned article.

According to the invention, there is also provided a thermally insulating structure comprising a first structure, a second structure and a mat-shaped inorganic fiber thermal insulator arranged between the first and second structures, wherein
inorganic fibers of the thermal insulator are arranged in parallel with the first and second structures, and built-up, so that the thermal insulator can be compressed in a direction perpendicular to a building-up direction, and
a dimension of the thermal insulator in the direction perpendicular to the building-up direction is greater than a gap between the first and second structures.

### BRIEF DESCRIPTION OF THE DRAWINGS

FIG. 1 is a schematic perspective view of a fibrous built-up article to be used for manufacturing a thermally insulating mat according to the invention.
FIG. 2 is a schematic front view of cut built-up articles to be used for manufacturing the thermally insulating mat according to the invention.
FIG. 3 is a schematic front view of rotated built-up articles obtained by rotating all the cut articles of FIG. 2 by 90 degrees.
FIG. 4 is a schematic front view of rotated built-up articles obtained by rotating part of the cut articles of FIG. 2 by 90 degrees.
FIG. 5 is a schematic illustration of the step of covering adjacent cut articles by a sheet and rotating them by 90 degrees.
FIG. 6 is a schematic front view of the rotated built-up articles obtained by the technique of FIG. 5.
FIG. 7 is a schematic front view of the thermally insulating mat obtained by bonding adjacent rotated articles by means of an adhesive agent.
FIG. 8 is a schematic front view of the thermally insulating mat covered at a top surface and a bottom surface thereof by a facing material.
FIG. 9 is a schematic front view of the thermally insulating mat covered at the top surface, the bottom surface and lateral surfaces thereof by a facing material.
FIG. 10 is a schematic illustration of a technique of inclining lateral surfaces of the thermally insulating mat by means of guides.
FIG. 11 is a schematic front view of the thermally insulating mat obtained by means of the technique of FIG. 10 and covered at the top surface and the bottom surface thereof by a facing material.
FIG. 12 is a schematic illustration of a technique of inclining the lateral surfaces of the thermally insulating mat by means of cutters.
FIG. 13 is a schematic front view of the thermally insulating mat obtained by means of the technique of FIG. 12.
FIG. 14 is a schematic front view of the mat-shaped thermal insulator having cuts formed on the lateral surfaces thereof.
FIG. 15 is a schematic perspective view of the mat-shaped thermal insulator having cuts formed on the lateral surfaces thereof.
FIG. 16 is a schematic front view of the mat-shaped thermal insulator having cuts formed on the lateral surfaces thereof, and covered at the top surface, the bottom surface and the lateral surfaces thereof by a facing material.
FIG. 17 is a schematic front view of the mat-shaped thermal insulator having cuts formed on the lateral surfaces thereof, and covered at the top surface and the bottom surface thereof by a facing material.
FIG. 18 is a schematic front view of the mat-shaped thermal insulator having cuts formed on the lateral surfaces thereof, and covered at the bottom surface by a facing material.
FIG. 19 is a schematic perspective view of the mat-shaped thermal insulator having inclined lateral surfaces and cuts formed on the lateral surfaces thereof, and covered at the top surface, the bottom surface and the lateral surfaces thereof by a facing material.
FIG. 20 is a schematic front view of the mat-shaped thermal insulator having inclined lateral surfaces and cuts formed on the lateral surfaces, and covered entirely at the top surface thereof but partly at the bottom surface thereof by a facing material, the facing material being bonded to the respective surfaces by means of an adhesive agent.
FIG. 21 is a schematic perspective view of the mat-shaped thermal insulator having cuts formed on the lateral surfaces thereof.
FIG. 22 is a schematic front view of the mat-shaped thermal insulator having cuts formed on the lateral surfaces thereof, and covered entirely at the top surface thereof but partly at the bottom surface thereof by a facing material, the facing material being bonded to the respective surfaces by means of an adhesive agent.
FIG. 23 is a schematic front view of the mat-shaped thermal insulator covered at the top surface thereof and the bottom surface thereof by a facing material.
FIG. 24 is a schematic perspective view of an aligned thermally insulating article.
FIG. 25 is a schematic perspective view of a compressed and aligned thermally insulating article.
FIG. 26 is a schematic perspective view of a package.
FIG. 27 is a schematic front view of the mat-shaped thermal insulator obtained by rotating by 90 degree only the cut articles arranged at the lateral ends thereof.
FIG. 28 is a schematic transversal cross sectional view of the thermally insulating mat placed in position.
FIG. 29 is a schematic front view of the mat-shaped thermal insulator having inclined lateral surfaces and covered entirely at the top surface thereof but partly at the bottom surface thereof by a facing material, the facing material being bonded to the respective surfaces by means of an adhesive agent.
FIG. 30 is a schematic front view of the mat-shaped thermal insulator having inclined lateral surfaces, and covered entirely at the bottom surface thereof by a facing material, the facing material being bonded to the bottom surface by means of an adhesive agent.
FIG. 31 is schematic transversal cross sectional view of mat-shaped thermal insulators used in a wooden and skeleton construction.

### DESCRIPTION OF THE PREFERRED EMBODIMENTS

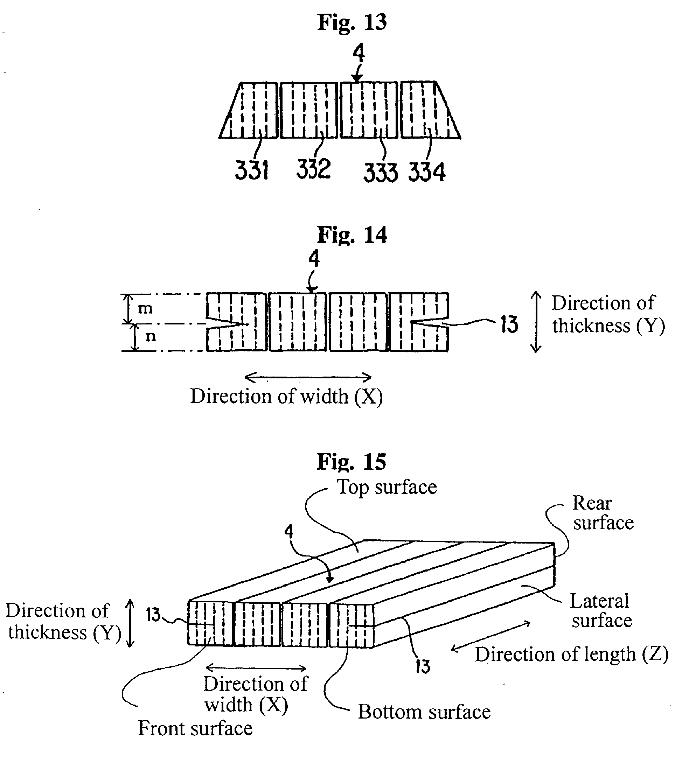

Referring to FIG. 15, a mat-shaped inorganic fiber thermal insulator or a mat-shaped thermal insulating article made of inorganic fiber according to the invention has a width (X-direction), a thickness (Y-direction) and a length (Z-direction). The mat-shaped inorganic fiber thermal insulator has a top surface, a bottom surface, opposite lateral surfaces, a front surface and a rear surface.

### <Method of manufacturing mat-shaped inorganic fiber thermal insulator>

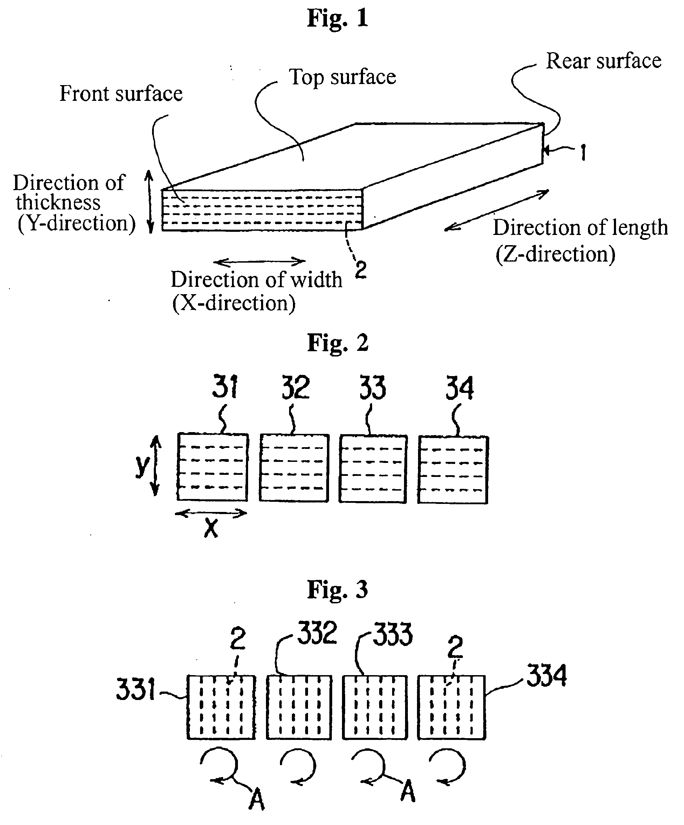

Firstly, a method of manufacturing a mat-shaped inorganic fiber thermal insulator (thermally insulating mat) will be described below by referring to FIGS. 1-7. The method comprises (1) manufacturing a fibrous built-up article 1, (2) cutting the fibrous built-up article 1 into cut built-up articles 3, (1) rotating at least one of the cut built-up articles 3 by an angle of 90 degrees to produce a rotated built-up article, and (4) integrating the cut built-up articles and/or the rotated built-up articles one another into a mat.

### (1) Manufacturing a fibrous built-up article 1

The fibrous built-up article 1 illustrated in FIG. 1 is manufactured by building-up filaments of inorganic fiber by means of any known process. Inorganic fiber such as glass wool or rock wool etc. is fined and built-up. If required, the built-up fibers are heated to adhere fibers one another. Then, the built-up fibers are pressed to reduce its thickness to a predetermined level, to form the fibrous built-up article 1 having a predetermined width.

As shown in FIG. 1, inorganic fibers are arranged transversally in the fibrous built-up article 1. The thickness and the width of the built-up article 1 are determined so as to conform to the provisions of the Japan Industrial Standards (JIS) etc. The built-up article 1 is not subjected to any limitation in terms of length.

### (2) Cutting the fibrous built-up article 1

Then, the built-up article 1 is cut longitudinally (in a direction perpendicular to the fibers) to produce a plurality of cut built-up articles 31, 32, 33, 34. While the built-up article 1 is cut into four articles in the illustrated embodiment of FIG. 2, the present invention is by no means limited thereto, and the built-up article 1 may be cut into three or six articles instead of four, for example. The number of the cut built-up articles and the width of the cut built-up article produced may be determined to meet the requirements relating to them. In the illustrated embodiment of FIG. 2, each of the cut built-up articles has a same width (and hence the built-up article 1 is evenly divided). However, the present invention is by no means limited thereto. In the illustrated embodiment of FIG. 2, each of the cut built-up articles 3 has a thickness Y of 105mm, a width X of 90mm. However, each of the cut built-up articles 31, 34 may be made to have a width of 90mm, and each of the cut built-up articles 32, 33 may be made to have a width of 140mm. They may have some other values for the width.

### (3) Rotating the built-up article 3

Thereafter, at least one of the plurality of cut built-up articles 3 is rotated by 90 degrees in a direction (A-direction) perpendicular to the longitudinal direction (Z-direction) to produce a rotated built-up article. Thus, the fibers of the rotated built-up article 3 are aligned to the direction of thickness (Y-direction).

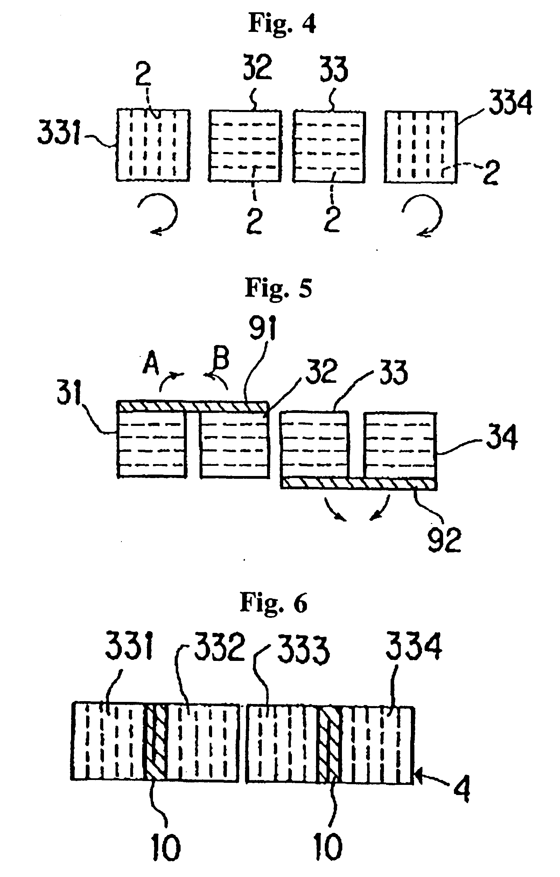

FIG. 3 shows an embodiment where all the cut built-up articles 31, 32, 33, 34 are rotated by 90 degrees, whereas FIG. 4 shows an embodiment where only the articles 31, 34 are rotated by 90 degrees.

In the embodiment illustrated in FIG. 3, all of the fibers run or extend in the direction of thickness (Y-direction). On the other hand, in the embodiment illustrated in FIG. 4, the fibers of the rotated built-up articles 331, 334 that are located at the lateral ends run or extend in the direction of thickness (Y-direction).

For the purpose of the present invention, any cut built-up article(s) may be rotated by 90 degrees. When it is desired to raise the strength of the thermally insulating mat 4 along the lateral surfaces thereof, only the cut built-up articles 31, 34 located at the lateral ends are rotated by 90 degrees as shown in FIG. 4.

Referring now to FIG. 5, the adjacent cut built-up articles 31, 32 (or 33, 34) may be covered respectively by a sheet 91 or 92 at the top surface thereof or at the bottom surface thereof. The cut built-up article 31 may be rotated to the A-direction, and the cut built-up article 32 may be rotated to the B-direction, so as to make the adjacent built-up articles contact each other at the top surfaces or at the bottom surfaces as shown in FIG. 6. With this arrangement, the sheet 91 or 92 is folded. If the applied sheet 91 or 92 is made of dampproof film, a dampproof layer 10 that is running in the direction of width is formed in the thermally insulating mat 4.

### (4) Integrating the cut built-up articles

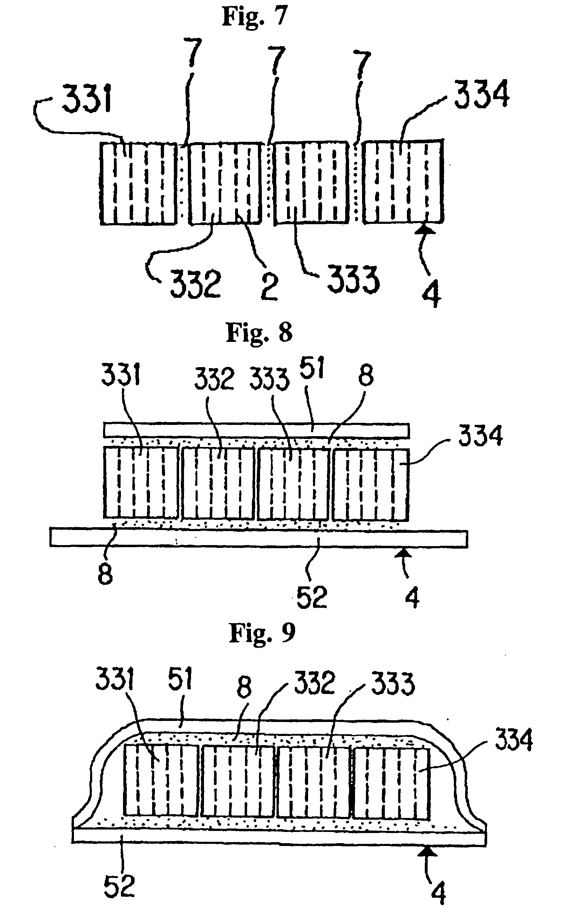

Then, the cut built-up articles and/or the rotated built-up articles are integrated one another in the direction of width to form the thermally insulating mat 4. As shown in FIG. 7, adjacent cut built-up articles (rotated built-up articles) that are arranged transversally are bonded together typically by means of an adhesive agent 7. Any known adhesive agent that can bond inorganic fiber may be used for the purpose of the present invention.

Instead, cut built-up articles (rotated built-up articles) may be integrated to form the thermally insulating mat 4, by covering a coat 5 on at least one surfaces of the cut built-up articles (rotated built-up articles). In this case, it is not necessary to apply the adhesive agent on the lateral surface of the cut built-up article (rotated built-up article). In the embodiment illustrated in FIG. 8, the rotated built-up articles 331, 332, 333, 334 are covered at top surfaces and bottom surfaces thereof by a top facing material 51 and a bottom facing material 52, which are bonded to the respective surfaces by means of an adhesive agent 8, 8 so as to integrate the rotated built-up articles 331, 332, 333, 334. Alternatively, the rotated built-up articles may be covered only at one of the top surfaces or the bottom surfaces. Still alternatively, as shown in FIG. 9, the top facing material 51 may be arranged so as to cover the top surface and the opposite lateral surfaces of the integrated articles, and the bottom facing material 52 may be arranged so as to cover the bottom surface of the integrated articles. Additionally, the front surface and the surfaces of the integrated article or the insulating mat may be covered by a facing material.

### <Thermally insulating mat>

The mat-shaped inorganic fiber thermal insulator (thermally insulating mat) according to the invention is manufactured by the above described method. While the illustrated thermally insulating mat 4 has a thickness of 90mm or 140mm, a width of 420mm, the present invention is by no means limited thereto.

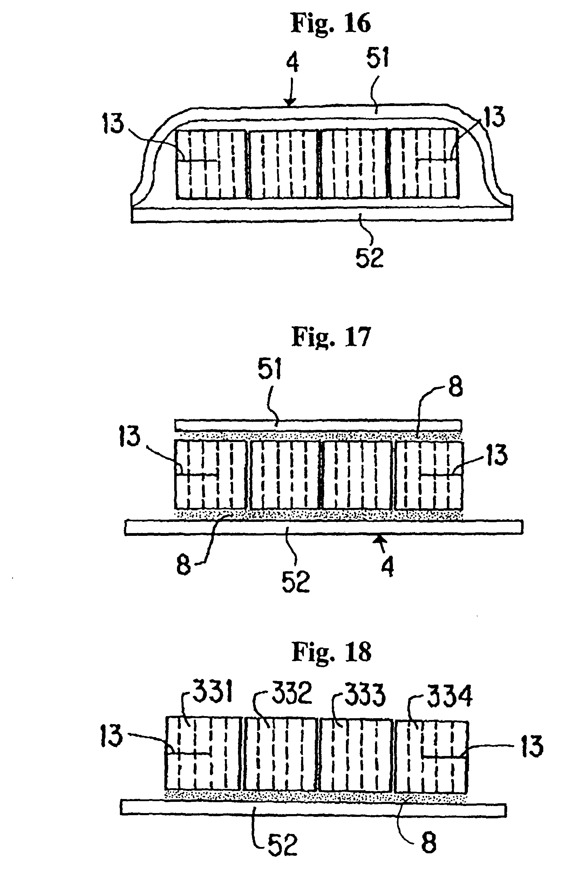

In each of the thermally insulating mats illustrated in FIGS. 7 through 22 that are manufactured by the method illustrated in FIG. 3, all of the inorganic fiber run in the direction of thickness (Y-direction). In other words, all of the fibers are built-up in the direction of width (X-direction). Therefore, the thermally insulating mat 4 can be compressed in the direction of width (X-direction). At the same time, the thermally insulating mat 4 shows a large anti-pressure strength in the direction of thickness (Y-direction).

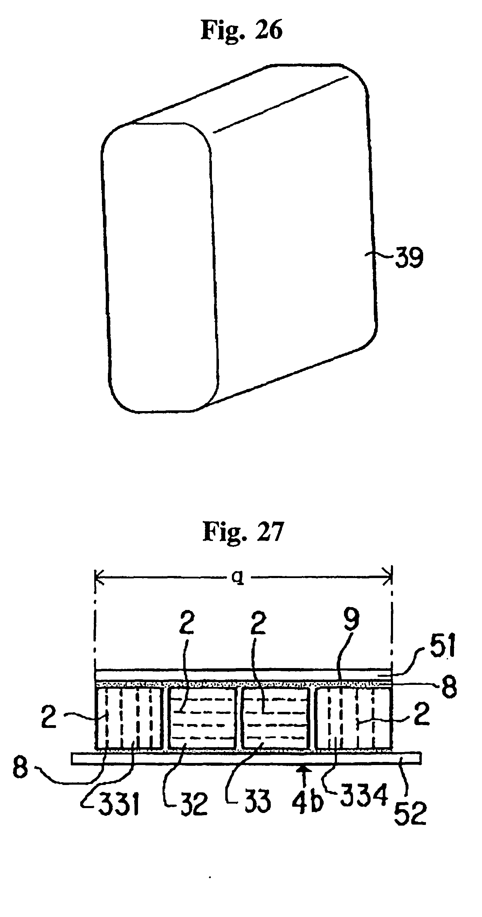

On the other hand, in the case of a thermally insulating mat illustrated in FIG. 27 that is manufactured by the method described above by referring to FIG. 4, the inorganic fiber in the rotated articles 331, 334 are built-up in the direction of width (X-direction). Thus, at the rotated articles 331 and 334, the mat has the increased ant-pressure strength in the direction of thickness (Y-direction), and can be compressed in the direction of width (X-direction).

Additionally, according to the invention, the rigidity of the thermally insulating mat is improved in the longitudinal direction. When manufacturing the fibrous built-up article 1, the top surface and the bottom surface are hardened by heat. Therefore, the hardened surfaces extend both in the direction of width (X-direction) and in the direction of length (Z-direction). As described, according to the invention, the fibrous built-up article 1 is cut into four cut articles 2, which are then rotated by 90 degrees (in the case of the instance of FIG. 3). Therefore, the hardened top surface is divided by four. Similarly, the hardened bottom surface is divided by four. Thus, after the cut articles 2 are rotated, the hardened surfaces extend in the direction of thickness (Y-direction) and in the direction of length (Z-direction) of the mat 4 in each of the rotated articles. Therefore, according to the invention, a total of eight hardened surfaces extend in the direction of length (Z-direction) of the mat, so as to improve the longitudinal rigidity of the mat 4.

### <Facing material / sheet>

The mat-shaped inorganic fiber thermal insulator (thermally insulating mat 4) according to the invention may not have any facing material as shown in FIG. 7, or it may have facing material(s) as shown in FIG. 8, in which the thermally insulating mat is covered by a facing material at least one surface thereof. As shown in FIG. 8, the thermally insulating mat may be covered by the top facing material 51 at the top surface and the bottom facing material 52 at the bottom surface, which facing materials are bonded to the thermally insulating mat by means of an adhesive agent. The thermally insulating mat may be covered by the facing materials 51, 52 at the top surface, the bottom surface and the lateral surfaces as shown in FIG. 9. The thermally insulating mat may be covered by a facing material at all the six surfaces thereof.

Any known plastic film may be used for such the facing material. The plastic film may be provided with pores to allow air to pass through them. A thin metal film may be deposited on the plastic film by evaporation. A facing material of an appropriate material is selected depending on an application of the thermally insulating mat.

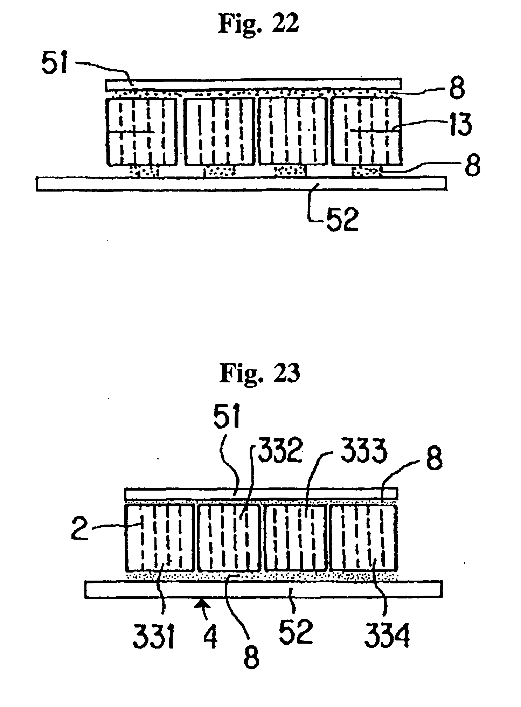

For example, the thermally insulating mat 4 as shown in FIG. 23 is arranged with its top surface directed to an outside of a room and its bottom surface directed to an inside of the room. Therefore, referring to FIG. 23, the top facing material 51 bonded to the mat 4 is made of polyethylene film that has a thin film of aluminum deposited thereon by evaporation and that is provided with numerous pores to allow air to pass through them. The top facing material has a thickness of 9 µm. On the other hand, the bottom facing material 52 bonded to the mat 4 is made of dampproof polyethylene film that has a thickness of 15 µm. The bottom facing material 52 may be made wider than the total width of the rotated articles (and the cut articles). When the bottom facing material 52 is wider than the total width of the rotated articles (and the cut articles), the bottom facing material 52 also covers a structure such as pillars, so as to improve the dampproof effect thereof. A portion of the bottom facing material that extend beyond the rotated articles (and the cut articles) operate as securing margins to be used when it is rigidly secured to the structure by means of tacks or some other fasteners. However, the thermally insulating mat can be adapted to be rigidly secured to structures without any fasteners, so that such securing margins are not essential.

In the mat, the sheet may be arranged between two adjacent cut articles (rotated articles). As the cut articles 31, 32, 33, 34 are rotated by 90 degrees by means of the method of FIG. 5, the top sheet 91 is arranged between the rotated article 331 and the rotated article 331, while the bottom sheet 92 is arranged between the rotated article 333 and the rotated article 334. These sheets are made of a material same as that of the above described facing materials. For example, if the sheets 91, 92 are dampproof sheets, the thermally insulating mat 4 contains one or more than one dampproof layers 10.

### <Bonding the facing material to the thermally insulating mat>

Any known adhesive agent can be used to bond the facing materials 51, 52 and/or the sheets 91, 92 to the thermally insulating mat 4 (or the cut articles 3). If the facing materials and/or the sheets are made of plastic film, any known adhesive agent adapted to bond plastic film and inorganic fiber can be used for the purpose of the invention.

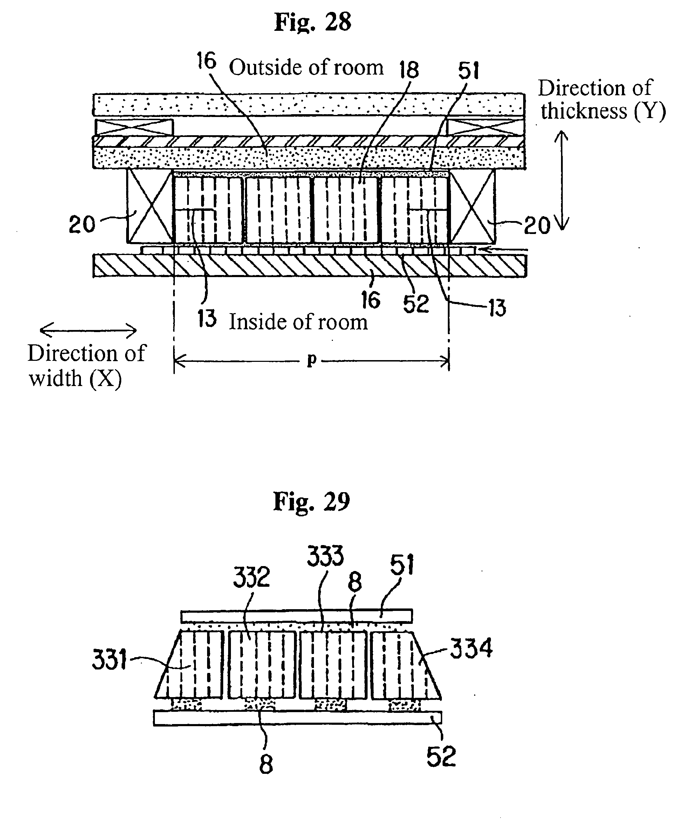

When the facing material (the sheet) is bonded to the thermally insulating mat (cut articles, rotated articles), the adhesive agent may be applied to the entire corresponding surface of the facing material (sheet) and/or that of the mat (cut articles, rotated articles), or may be partially applied. When the adhesive agent is applied entirely, the facing material (sheet) and the mat (cut articles, rotated articles) are firmly integrated. When the adhesive agent is applied partially, a consumption of the adhesive agent can be reduced. The adhesive agent may be applied as dots or as strips. In the embodiment illustrated in FIG. 29, the top facing material 51 and the thermally insulating mat 4 are bonded to each other over the entire surfaces thereof by the adhesive agent 8, while the adhesive agent 8 is applied as strips (or dots) to bond the bottom facing material 52 and the mat 4.

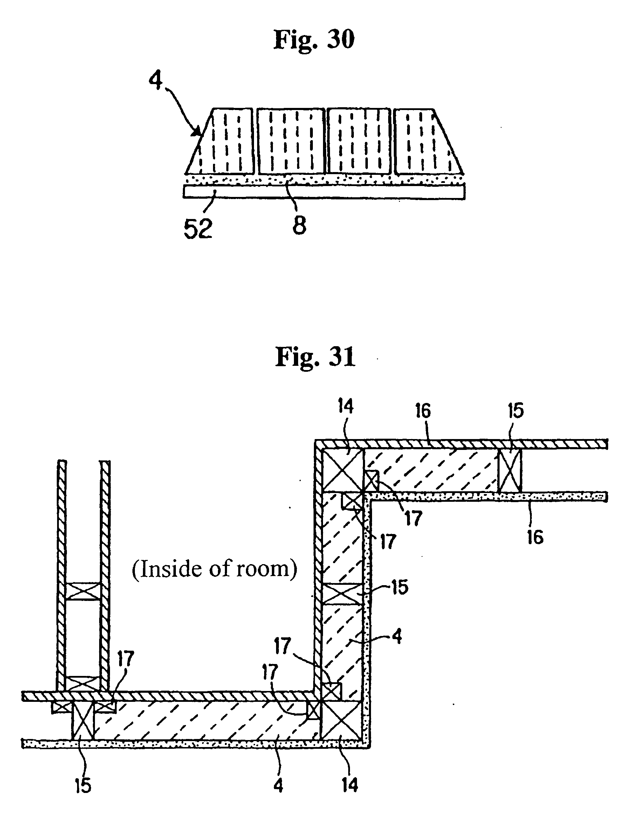

In the embodiment illustrated in FIG. 30, only the bottom facing material 52 is bonded to the bottom surface of the mat 4. In this case, the adhesive agent 8 is applied to the entire surface of the mat 4 and/or that of the bottom facing material 52 to improve the integrity.

### <The mat having inclined lateral surfaces>

The lateral surface of the mat may be inclined relative to the Y-direction. When the lateral surface of the mat are inclined, the mat can be made to tightly adhere to structures (such as pillars etc.), even if the structures have steps on the surfaces thereof to which the lateral surfaces of the mat contact respectively.

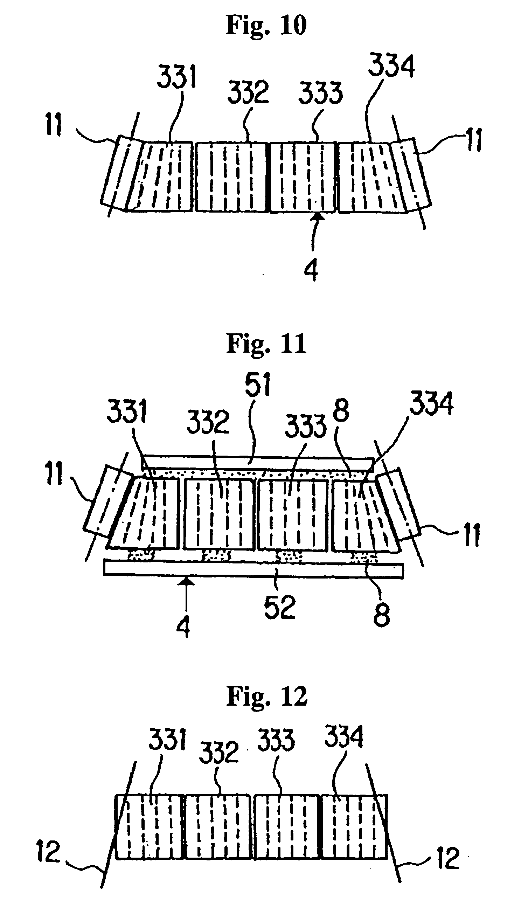

FIGS. 10-13 shows a method for inclining the lateral surfaces of the mat 4, and the mat having inclined lateral surfaces. With the method illustrated in FIG. 10, rotated articles 331, 332, 333, 334 are forced to enter a space between a pair of guides 11, 11 that are inclined relative to the Y-direction. Then, the left lateral surface of the rotated article 331 and the right lateral surface of the rotated article 334 are pressed by the respective guides 11, 11 to become inclined.

Then, the top facing material 51 and the bottom facing material 52 are bonded to the rotated articles that are pressed by the guides 11, 11 at the outermost lateral surfaces, to produce a thermally insulating mat 4a having inclined lateral surfaces as shown in FIG. 11.

Alternatively, the inclined surface can be produced as illustrated in FIG. 12. Adjacent cut articles (rotated articles) are bonded to each other in advance by means of the adhesive agent. Then, as shown in FIG. 12, the left surface of the rotated article 331 and the right surface of the rotated article 334 are cut respectively by respective cutters 12, 12 that are inclined relative to the Y-direction, to produce the thermally insulating mat 4a having inclined lateral surfaces as shown in FIG. 13. In this case, it is possible to produce the mat 4a having inclined lateral surfaces without covering the mat by the facing material.

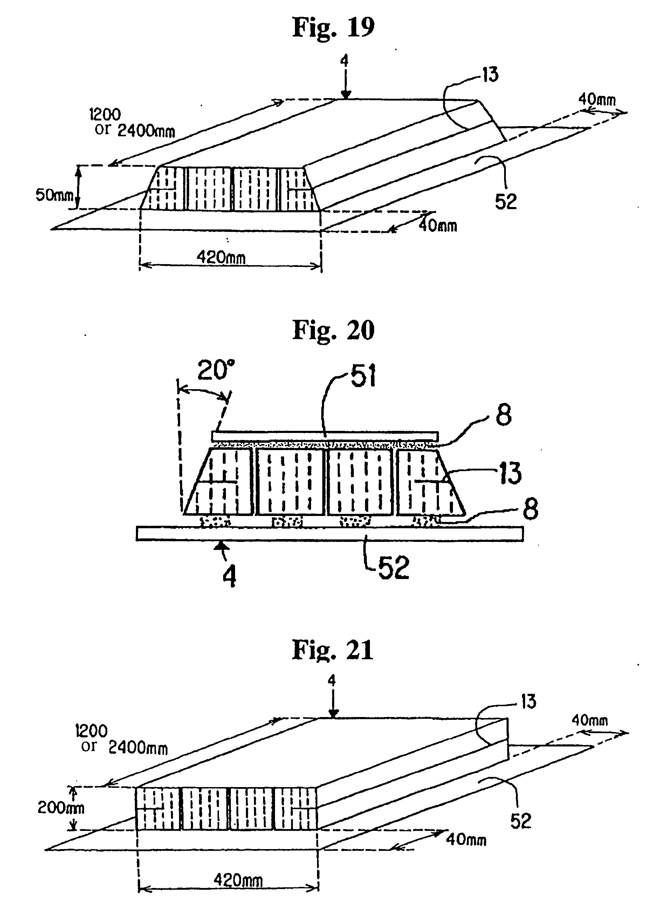

An appropriate angle of inclination may be selected for the inclined lateral surface of the mat. The angle may be determined by a gap between structures such as pillars, between which the mat is arranged, the difficulty of an operation of placing the mat in position, and other factors. While the angle of inclination is normally between 0 and 20 degrees as shown in FIG. 20, the present invention is by no means limited thereto.

### <The thermally insulating mat having cuts formed at the lateral surfaces>

The thermally insulating mat according to the invention may be provided with cuts that extend longitudinally on the respective lateral surfaces thereof. A depth of each cut extends in the X-direction, and a length of each cut extends in the Z-direction (FIG. 14).

FIGS. 14-22 show embodiments of thermally insulating mats having cuts 13 formed on the lateral surfaces thereof and extending longitudinally (in the Z-direction). The cuts (slits) 13 are formed along an entire length of the mat as shown in FIG 15. The depth (the length in the X-direction) of each slit is about 80mm, when the mat 4 has a width of 420mm, although the present invention is by no means limited thereto.

As shown in FIG. 14, inorganic fibers are integrated in the X-direction. Therefore, the mat 4 can be compressed in the X-direction. When the cut 13 is formed, only the part m (or part n) can be compressed.

FIG. 31 shows thermally insulating mats used in a wooden and skeleton construction. It is a schematic cross sectional plan view. In FIG. 31, there are shown pillars 14, studs 15, wall backing members 16 at an inside and an outside of a room, and brackets 17 for securing the wall backing members 16. As shown in FIG. 31, each of the brackets 17 projects from the corresponding pillar 14 or the stud 15 at an external corner or an internal corner. Each mat 4 according to the invention is arranged in a space defined by the internal member 16, the external member 16 and pillars 14 (or the stud 15). More specifically, the mat 4 is arranged in such a way that the top surface and the bottom surface of the mat 4 are held in contact respectively with the corresponding wall backing members 16, 16. Even if a distance between the pillar 14 and the stud 15 is smaller than the width of the mat 4 (the length in the X-direction in FIG. 15), it is not necessary to cut the mat 4 longitudinally to reduce its width, because the mat 4 can be compressed transversally (in the X-direction). Additionally, even if the brackets 17 are projected to the inside from the pillar 14 and/or the stud 15, the mat 4 can be compressed in the X-direction to an extent that corresponds to each of the brackets 17, 17, because of the cuts 13. Therefore, the mat is tightly held in contact with the pillar 14, the stud 15, the wall backing members 16, 16 and the brackets 17, so as to provide thermal insulation sufficiently.

### <Package>

A plurality of mat-shaped inorganic fiber thermal insulators (thermally insulating mats) according to the invention may be laid one on the other or arranged side by side, compressed, and put into a packaging bag, to form a package, which can improve an efficiency of storage and transportation. Such the package will be described below.

FIG. 23 shows a thermally insulating mat 4 adapted to form the package. The mat 4 illustrated in FIG. 23 is manufactured by cutting the fibrous built-up article 1 into four cut built-up articles 3, rotating all of the cut articles 3 rotated by 90 degrees, and covering them by a top facing material 51 and a bottom facing material 52. In the mat 4 illustrated in FIG. 23, all of the inorganic fibers are built-up in the X-direction.

The mat 4 has dimensions including a thickness (Y-direction) of 90mm, a width (X-direction) of 480mm and a length (Z-direction) of 1,200mm and a density of about 16kg/m³, although the present invention is by no means limited thereto.

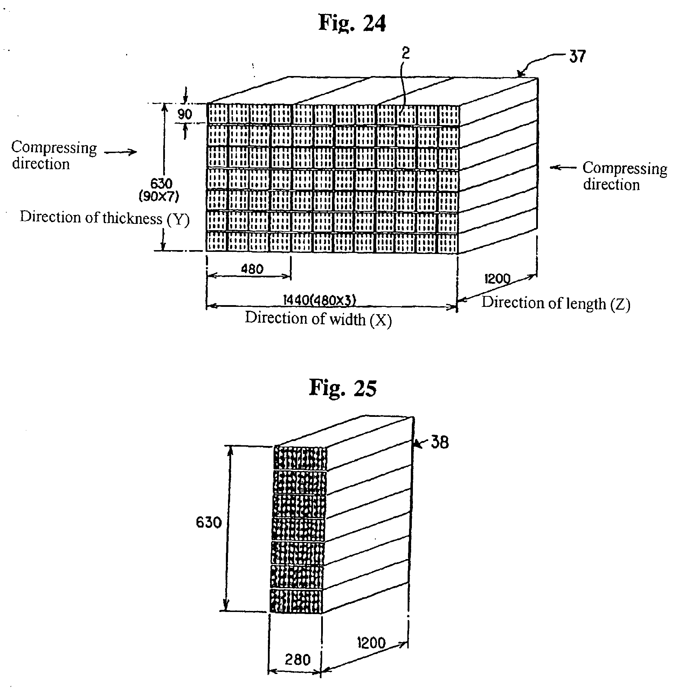

As shown in FIG. 24, three mats 4 are arranged in the X-direction to form a layer, and seven layers are laid one on the other in the Y-direction, to form an aligned thermal insulating article 37, which comprising a total of 21 mats 4 (84 rotated articles 3). The aligned article 37 has dimensions including a height (Y-direction) of 630mm (90 × 7), a width (X-direction) of 1,440mm (480 × 3) and a length (Z-direction) of 1,200mm. Inorganic fiber are built-up in the X-direction.

The aligned article 37 illustrated in FIG. 24 is compressed transversally (in the X-direction) to reduce the width to 280mm. Since all inorganic fibers are built-up in the direction of width (X-direction) in the aligned article 37 of FIG. 24, the aligned article 37 is not compressed in the direction of length (Z-direction) and in the direction of height (Y-direction). Thus, a compressed and aligned article 38 of FIG. 25 has dimensions including a width of 280mm, a thickness of 630mm and a length of 1,200mm. The compressed and aligned article 38 is packed in a packaging bag typically made of polyethylene, to produce a package 39 as shown in FIG. 26.

FIG. 27 is a schematic front view of a thermally insulating mat 4 obtained by rotating only cut articles 31, 34. In the mat shown in FIG. 27, only the inorganic fibers of rotated articles 331, 334 are built-up in the X-direction. Even if same amount of pressure is applied to the mat of FIG. 27 and the mat of FIG. 24, the mat of FIG. 27 is less compressed than the mat of FIG. 24. The extent of compression varies depending on the direction of the building-up of inorganic fibers.

### <Thermally insulating structure>

Thermally insulating mats as described above are combined with pillars and wall members etc., to form a "thermally insulating structure". While such thermally insulating structure may be formed on a building site, it may be manufactured in a plant as prefabricated structure when it is used for an advanced construction such as 2 × 4 construction.

FIG. 28 shows an embodiment of the thermally insulating structure containing the mat-shaped inorganic fiber thermal insulator (thermally insulating mat) 4 according to the invention, although the present invention is by no means limited to FIG. 28. The illustrated thermally insulating structure comprises structures 20 such as pillars or studs, wall backing members 16, and the thermally insulating mat 4 arranged in the space defined the structures 20 and the wall backing members 16. In the illustrated embodiment, the mat 4 is arranged in such a way that inorganic fibers are integrated in the X-direction, so that the mat 4 can be compressed in the X-direction. "P" denotes a gap between two adjacent structures, and "q" denotes a total width of the rotated built-up articles and/or cut built-up articles (see FIG. 27). The width q of the mat 4 is made greater than the gap p. Since the mat 4 can be compressed in the X-direction and actually compressed between the structures 20, it is not necessary to anchor the mat 4 to the structures 20 (typically by means of tacks).

In the illustrated embodiment, the mat 4 is provided on the lateral surfaces thereof with respective cuts 13. Therefore, even if brackets (not shown in FIG. 28) are provided, the mat 4 is partly compressed in the direction of width (X-direction). Thus, the mat 4 is tightly held in contact with the structures 20, to prevent the problem of poorly insulating from occurring.

Referring to FIG. 28, the mat 4 is covered by the top facing material 51 and the bottom facing material 52 that has a dampproof effect. Then, the thermally insulating structure is arranged in the building with the bottom facing material 52 located close to the inside of the room.

The wall of the building becomes complete by inserting the mat-shaped thermally insulating article (thermally insulating mat) 4 (whose width q is larger than the gap p between the corresponding structures, and in which inorganic fibers are integrated in the X-direction) between the structures 20, 20; arranging the internal wall backing member 16 close to the inside of the room; arranging the external wall backing member 16 (e.g., construction plywood) close to the outside of the room; and arranging, if necessary, a wind breaking layer, a ventilating layer and an external member etc.

While the above embodiment is described in terms of a wooden building, it can also be applied to a skeleton construction building. Additionally, while the above embodiment is described in terms of a wall, it can also be applied to a ceiling, a floor or a roof.

According to the present invention, inorganic fibers of a mat-shaped inorganic fiber thermal insulator are at least partly integrated in a direction running in parallel with lateral surfaces of the insulator. Therefore, the rigidity of the insulator is raised only in the direction of thickness, and the thickness of the insulator is not reduced, so that the thermally insulating property of the mat is secured.

For example, a rigidity (compression strength) of a conventional mat-shaped thermal insulator is 20kgf/m² for a compression ratio of 30%, whereas that of the thermal insulator according to the invention is 82 kgf/m² for the same compression ratio. Since conventional thermal insulators can be compressed to about 1/8 in terms of thickness, the thickness thereof is reduced due to deterioration with time, and due to the pressure being applied thereto from the related structures such as wall members and/or pillars at the position where it is arranged. To the contrary, the thermal insulator of the present invention is free from such a problem of the prior art, because it has a high compression strength.

The mat-shaped thermal insulator according to the invention can be compressed transversally. For example, when the thermal insulator according to the invention has a density of about 10 kg/m³, it can be compressed transversally to about 1/8. When the thermal insulator has a density of about 16 kg/m³, it can be compressed transversally to about 1/4.5. When the thermal insulator has a density of about 32 kg/m³, it can be compressed transversally to about 1/3. On the other hand, known mat-shaped thermal insulators cannot be compressed transversally.

Since the mat-shaped thermal insulator according to the invention can be compressed transversally, the compressed insulator has a pressure trying to restore the insulator, and such pressure is applied to the adjacently located structures (pillars, backing members, etc.). Therefore, the lateral surfaces of the insulator are respectively held in tight contact with the corresponding structures, so that it is not necessary to use anchoring means (tacks) to anchor the insulator to the structures. Since no anchoring means is required, it is no longer necessary to remove anchoring means when dismantling or demolishing the building, and hence the building materials can be recycled with ease.

Since the mat-shaped thermal insulator according to the invention shows an improved longitudinal rigidity, it is exempted from the problem of longitudinal warping in the structures. When the thermal insulator according to the invention is arranged in a wall, it is prevented from warping in a vertical direction of the wall.

In the mat-shaped thermal insulator according to the invention, inorganic fibers are arranged in the direction of the thickness of the insulator. Therefore, heating and drying air can easily pass through the insulator to dry the insulator very quickly. Therefore, the insulator according to the invention provides a high production efficiency if compared with conventional mat-shaped thermal insulators.

The mat-shaped thermal insulator according to the invention can be highly tightly held in contact with the corresponding structures, when the lateral surfaces thereof are inclined. Thus, the mat would not be displaced in the structures, to improve the make of the construction.

When the thermal insulator according to the invention is provided at the lateral surfaces thereof with respective cuts, it can be partly compressed in the direction of width. Therefore, even if there are projections at some of the corners of the structures, the thermal insulator is partly compressed, so that it is not necessary to cut the thermal insulator to reduce its width. Thus, there does not arise any problem of poor thermal insulation effect due to absence of a thermal insulator in such corners.

Additionally, since it is not necessary to cut the thermal insulator according to the invention on site, the industrial wastes that are produced on a building site can be reduced to a greater extent. Still additionally, since cutting operations are conducted highly accurately on thermal insulators in the manufacturing process, they effectively prevent the problem of poor insulation effect from occurring, although such a problem may arise when thermal insulators are cut insufficiently by hand on site.

When the thermally insulating mat is covered by a facing material at least at a surface thereof, the insulator is reliably integrated. When the insulator is covered by a facing material at two or more surfaces, the insulator is integrated more firmly.

When the mat and one or more facing materials are partially bonded to each other by means of an adhesive agent, the consumption of adhesive agent is reduced.

On the other hand, when the adhesive agent is entirely applied to surfaces of the mat and the one or more facing materials, the insulator is firmly integrated.

A package according to the invention contains mat-shaped thermal insulators that are compressed transversally to such an extent that they can restore the original width when unpacked. Therefore, the mat-shaped thermal insulators can be held in a compressed state and restore the proper dimensions when unpacked. Thus, the space necessary to transport such package to a building site and to store them on site can be reduced, and the package can be used immediately for construction after being unpacked.

A thermally insulating structure can be easily formed by using the mat-shaped thermal insulator according to the invention in combination with an external wall backing member, an internal wall backing member and so on for a wood and skeleton construction. Thus, the dimensions and combinations of structures to be used for framed wall constructions such as 2 × 4 constructions can be easily standardized. Additionally, the thermally insulating structure can also find applications in iron framework constructions. Still additionally, the thermally insulating structures can be manufactured as panels in a plant so as to be used for skeleton panel constructions.

## Claims

1. A mat-shaped thermal insulator (4) made of inorganic fiber, wherein
at least a part of inorganic fibers is built-up in a direction parallel to lateral surfaces of the insulator (4), and
said insulator (4) is formed by
cutting a fibrous built-up article (1) formed by building-up inorganic fibers, to form cut built-up articles (3, 31, 32, 33, 34),
rotating at least one of the cut articles (3, 31, 32, 33, 34) by an angle of 90 degrees in a direction perpendicular to a longitudinal direction, to form a rotated built-up article (331, 332, 333, 334) in which the inorganic fibers are built-up in a direction parallel to lateral sides of the cut article, and
integrating the cut articles (3, 31, 32, 33, 34) and/or the rotated article (331, 332, 333, 334) transversally in a direction perpendicular to cutting direction.

2. The thermal insulator according to claim 1, wherein the lateral surfaces of the insulator (4) are inclined.

3. The thermal insulator according to claim 1 or 2, wherein longitudinal cuts (13) are formed on the lateral surfaces of the insulator (4) so as to make the insulator partially compressible.

4. The thermal insulator according to claim 1, 2 or 3, wherein at least one of the surfaces of the insulator (4) is coated by a facing material (5, 51, 52).

5. The thermal insulator according to claim 4, wherein said insulator (4) and the facing material (5, 51, 52) are bonded to each other by means of an adhesive agent (8), and the adhesive agent (8) is partially applied to the insulator (4) and/or the facing material (5, 51, 52).

6. The thermal insulator according to claim 4, wherein said insulator (4) and the facing material (5, 51, 52) are bonded to each other by means of an adhesive agent (8), and the adhesive agent (8) is entirely applied to surfaces of the insulator (4) and/or the facing material (5, 51, 52).

7. A package (39) of mat-shaped inorganic fiber thermal insulators, wherein
said package (39) comprises a packaging bag and aligned thermal insulating articles (37) packaged in the packaging bag,
said aligned articles (37) are compressed transversally,
said aligned articles (37) are formed by arranging a plurality of mat-shaped inorganic fiber thermal insulators (4) according to claim 1, 2, 3, 4, 5 or 6, in parallel and/or by laying the insulators one on the other, and
in each of said mat-shaped inorganic fiber thermal insulators (4), inorganic fibers are built-up in a direction of a width of the aligned article (37).

8. A thermally insulating structure comprising a first structure, a second structure and a mat-shaped inorganic fiber thermal insulator arranged between the first and second structures, wherein
inorganic fibers of the thermal insulator are arranged in parallel with the first and second structures, and built-up, so that the thermal insulator can be compressed in a direction perpendicular to a building-up direction, and
a dimension of the thermal insulator in the direction perpendicular to the building-up direction is greater than a gap between the first and second structures.
